# EUROPÄISCHE PATENTSCHRIFT

(11) **EP 0 477 509 B1**
(45) Veröffentlichungstag und Bekanntmachung des Hinweises auf die Patenterteilung: **16.03.1994**
(21) Anmeldenummer: 91113253.8
(22) Anmeldetag: 07.08.1991
(51) Int. Cl.: B62D 1/19, B62D 1/18

(54) **Verstellbare Sicherheitslenksäule für ein Kraftfahrzeug**
Safety adjustable steering column for a vehicle
Colonne de direction de sécurité réglable pour un véhicule

(30) Priorität: 26.09.1990 DE 4030405
(43) Veröffentlichungstag der Anmeldung: 01.04.1992
(73) Patentinhaber: Dr.Ing.h.c. F. Porsche Aktiengesellschaft, 70435 Stuttgart (DE)
(72) Erfinder: Faulstroh, Hans-Joachim, W-7251 Wimsheim (DE)

(56) Entgegenhaltungen:
- DE-A- 2 904 205
- DE-A- 3 318 935
- FR-A- 2 633 579

## Beschreibung

Die Erfindung bezieht sich auf eine verstellbare Sicherheitslenksäule für ein Kraftfahrzeug nach dem Oberbegriff des Anspruchs 1.

Aus der DE-PS 33 18 935 ist eine axial verstellbare Lenksäule für ein Kraftfahrzeug bekannt, bei der mit einem inneren Mantelrohr eine Zahnstange verbunden ist, in die ein Ritzel eines Verstellmotors eingreift. Hierdurch wird das Mantelrohrteil mit der verbundenen Lenkspindel axial verschoben. Eine energieaufnehmende Einrichtung ist bei dieser Lenksäule nicht vorgesehen. Eine weitere Lenksäule, die die im Oberbegriff des Anspruchs 1 definierten Merkmale aufweist, ist aus der DE-29 04 205 C2 bekannt, bei der eine äußere Prallhülse mit einem Deformationselement ausgeführt und verbunden ist, das sich endseitig mit seinem, dem Lenkrad abgekehrten Ende am Lenkrohr abstützt.

Aufgabe der Erfindung ist es, eine verstellbare Lenksäule zu schaffen, die den Sicherheitserfordernissen bei einem Crash entspricht.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß in kompakter Bauweise eine Lenksäule geschaffen wird, die axial verstellbar ist und gleichzeitig energieaufnehmend wirkt.

Die Verstelleinrichtung ermöglicht neben der axialen Verschiebung der Lenksäule auch ein Festhalten des Deformationselements bei einem Crash. Da eine direkte Anbindung zum Fahrzeugaufbau hin fehlt, wird über ein Ritzel der Verstelleinrichtung das in eine Zahnstange am Deformationselement eingreift, die Lenksäule abgestützt.

In besonderer Ausgestaltung ist ein erstes inneres Mantelrohrteil, an dem die Lenkspindel gelagert ist, einteilig mit dem Deformationselement verbunden, das in etwa dem Außendurchmesser des Mantelrohrteiles entspricht. Anschließend an das erste innere Mantelrohrteil erstreckt sich ein drittes mittleres Mantelrohrteil, welches das Deformationselement einschließt und an dem endseitig das Deformationselement befestigt ist. Diese Art der Verbindung des Deformationselements mit dem mittleren Mantelrohrteil ermöglicht über eine mit diesem Teil verbundene Zahnstange und ein eingreifendes Zahnelement, wie z.B. einem Ritzel die axiale Verschiebung der Lenksäule sowie ein Festsetzen der Lenksäule.

Vorzugsweise ist das mittlere Mantelrohrteil mit seinem dem Befestigungsort zum Deformationselement abgekehrten Ende auf dem ersten inneren Mantelrohrteil abgestützt und kann über abscherbare Kunststoffstifte befestigt sein, damit zum axialen Verschieben eine Krafteinleitung auch über dieses verbundene Ende erfolgen kann und bei einem Crash eine entsprechende Abstimmung zur Energieaufnahme erfolgt.

Das Deformationselement ist innerhalb des Zylinders des mittleren Mantelrohrteiles und auf der Lenkspindel geführt, d.h., es liegt an der Innenumfangsfläche und auf der Außenfläche an, so daß kein Ausknicken des Deformationselements bei einem Crash sowie bei einer Axialverschiebung der Lenksäule erfolgen kann.

Das Deformationselement besteht vorzugsweise aus einem Wellrohr und ist einteilig mit dem Mantelrohrteil ausgeführt, indem das Ende des Mantelrohrteils in einem besonderen Verfahren entsprechend gestaucht wird. Denkbar ist auch ein vom Mantelrohrteil getrenntes Wellrohr oder entsprechende Deformationselemente, die energieaufnehmend wirken.

Die Lenkspindel ist im Bereich des mittleren Mantelrohrteiles geteilt ausgeführt und über eine Längsverzahnung miteinander verschiebbar verbunden. Eine weitere Teilung einer anschließenden Lenkspindel ist im Bereich zwischen einem Lenkgetriebe und einem Gelenk vorgesehen.

Ein Ausführungsbeispiel der Erfindung ist in der Zeichnung dargestellt und wird im folgenden näher beschrieben.

Es zeigen:
Fig. 1 eine Sicherheitslenksäule in einem Längsschnitt,
Fig. 2 eine Einzelheit Z einer Verstelleinrichtung im Schnitt,
Fig. 3 eine Darstellung der Lenksäule gemäß Fig. 1 nach einem Crash,
Fig. 3a eine vergrößerte Darstellung der Lenksäule gemäß Fig. 3 und
Fig. 4 eine in Pfeilrichtung X verstellte Lenksäule im Schnitt.

Die Sicherheitslenksäule 1 umfaßt eine aus zwei Lenkspindelteilen 2 und 2a bestehende Lenkspindel, die mit einem Lenkrad 3 verbunden ist, dem ein Airbag 4 in einem Gehäuse zugeordnet ist. Die Lenkspindel 2, 2a ist in einem inneren und einem zweiten äußeren Mantelrohrteil 5, 6 in Lagern 5a und 6a gelagert und über ein Gelenk 7 mit einer weiteren Lenkspindel 8 verbunden, die zum Lenkgetriebe führt. Innerhalb des Mantelrohrteiles 6 ist ein Deformationselement 9 angeordnet, das bei einem Crash energieaufnehmend wirkt. Über eine Verstelleinrichtung 10 ist eine axiale Verschiebung der Lenksäule zwecks Anpassung an den Fahrer möglich.

Das erste innere Mantelrohrteil 5 ist mit dem Deformationselement 9 verbunden, das achsgleich zu diesem Mantelrohrteil 5 angeordnet ist und in etwa seinem Außendurchmesser entspricht. Das Deformationselement 9 ist vorzugsweise als Wellrohr ausgeführt. Es kann aber auch aus einem Lochrohr oder einem anderen energieaufnehmenden Bauteil bestehen. Es ist an seinem freien Ende 11 mit einem dritten mittleren Mantelrohrteil 12 verbunden, welches das Deformationselement umhüllt und sich bis zum freien Ende 13 des ersten inneren Mantelrohrteils 5 erstreckt. Dieses ist mit dem mittleren Mantelrohrteil 12 zwischen Gleitlagerungen 14, 15 und 16 des zweiten äußeren Mantelrohrteiles 6 verschiebbar in Pfeilrichtung 17 und 18 gelagert.

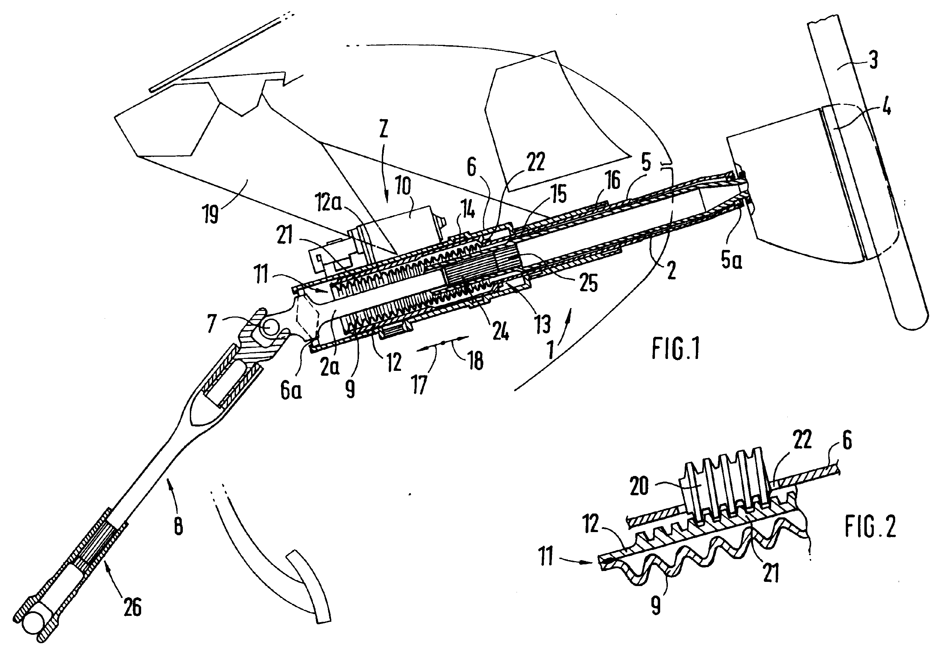

Dieses zweite äußere Mantelrohrteil 6 ist am Fahrzeugaufbau 19 abgestützt und trägt die Verstellvorrichtung 10. Diese umfaßt einen Motor, der ein Zahnelement, wie z.B. ein Ritzel 20 antreibt (Fig. 2), welches in einer Zahnstange 21 kämmt. Diese ist am dritten mittleren Mantelrohrteil 12 angeordnet und erstreckt sich über eine Länge, die dem gewünschten axialen Verschiebeweg entspricht. Das zweite äußere Mantelrohrteil 6 weist eine Öffnung 22 auf, in der das Ritzel 20 angeordnet ist.

Ein axiales Verstellen der Lenksäule 1 mittels des Ritzels 20 wird durch die Verbindung zwischen dem Deformationselement 9 und dem mittleren Mantelrohrteil 12 derart durchgeführt, daß dieses Mantelrohr sowie das erste innere Mantelrohrteil 5 mit dem Deformationselement 9 innerhalb des zweiten äußeren Mantelrohrteils 6 verschoben wird.

Das mittlere Mantelrohrteil 12 ist mit seinem dem freien Ende 13 des ersteninneren Mantelrohrteils 5 zugerichteten Ende auf diesem abgestützt und kann über abscherbare Kunststoffzapfen 22 mit dem Mantelrohrteil 5 verbunden sein. Das Deformationselement 9 ist in einem oberen Bereich auf der Lenkspindel 2 und in einem unteren Bereich innerhalb des mittleren Mantelrohrteiles 12 entlang der inneren Umfangsfläche 12a geführt.

Die beiden Teile 2 und 2a der Lenkspindel weisen im Bereich des Deformationselements 9 eine Verschiebeverbindung 24 auf, derart, daß das Lenkspindelteil 2a über eine Verzahnung 25 in das Lenkspindelteil 2 hineinschiebbar ist. Eine weitere gleiche Verschiebeverbindung 26 ist in der anschließenden Lenkspindel 8 vorgesehen.

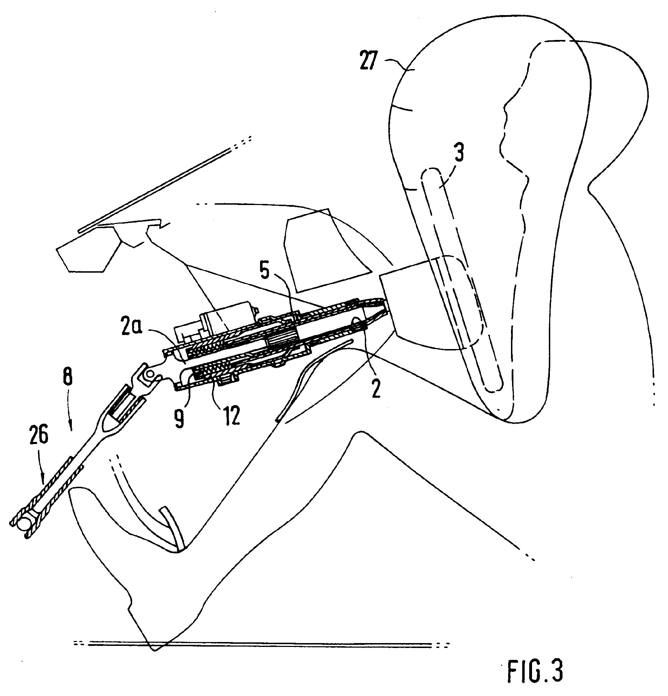

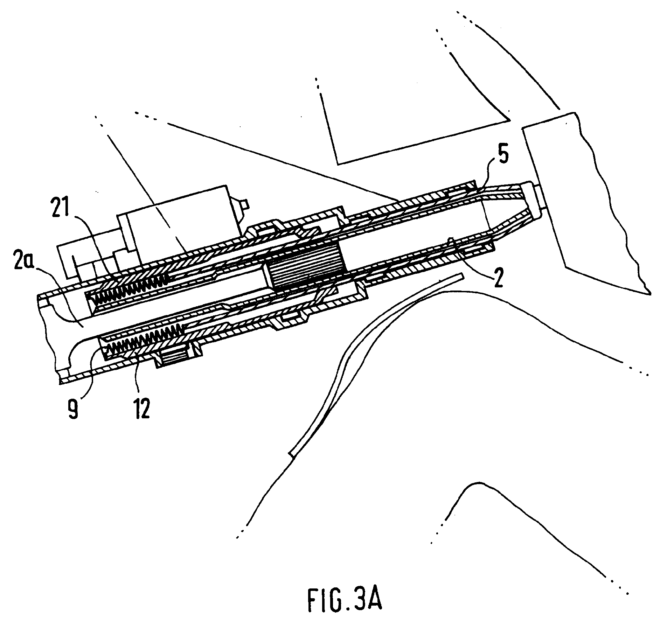

Wie Fig. 3 näher zeigt, tritt bei einem Crash ein Luftsack 27 des Airbag-Systems in Kraft und das Deformationselement 9 wird energieverzehrend zusammengedrückt.

Hierbei verschiebt sich das erste innere Mantelrohrteil 5 zum zweiten äußeren Mantelrohrteil 6 und zum mittleren Mantelrohrteil 12. Dieses wird über das Ritzel 20 festgehalten, so daß eine Kraftaufnahme zwecks Deformation des Elements 9 möglich ist. Bei dem Deformationsvorgang verschieben sich die Lenkwellenteile 2 und 2a innerhalb der Verschiebeverbindung 24 und das Lenkwellenteil 8 innerhalb der weiteren Verschiebeverbindung 26 ineinander.

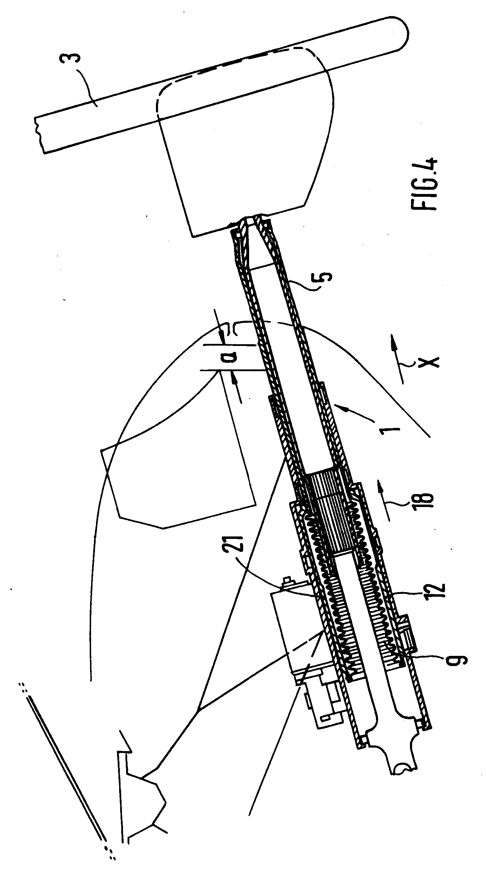

In Fig. 4 ist eine Verstellung der Lenksäule 1 näher dargestellt. Über die Drehung des Ritzels 20 im Profil der Zahnstange 21 am mittleren Mantelrohrteil 12 erfolgt z.B. eine Verschiebung in Pfeilrichtung 18, wobei durch die Verbindung mit dem Deformationselement 9 und dem anschließenden ersten inneren Mantelrohrteil 5 das Lenkrad 3 von einer Mittelstellung aus maximal um den Betrag a verschoben wird.

## Patentansprüche

1. Verstellbare Sicherheitslenksäule für ein Kraftfahrzeug, insbesondere mit Airbag, die eine teleskopisch zusammenschiebbare und in Mantelrohrteilen gelagerte Lenkspindel aufweist, wobei ein erstes inneres Mantelrohrteil (5) zwischen einer Lenkspindel und einem zweiten äußeren Manterohrteil (6) angeordnet ist und am freien, dem Lenkrad (3) abgekehrten Ende mit einem Deformationselement verbunden ist, **dadurch gekennzeichnet,** daß sich das Deformationselement (9) andernends an einem das Deformationselement (9) umhüllenden dritten mittleren Mantelrohrteil (12) abstützt, das eine Zahnstange (21) aufweist, in die zum axialen Verschieben der Lenksäule (1) ein kämmendes Zahnelement (20) einer Verstellvorrichtung (10) eingreift.

2. Sicherheitslenksäule nach Anspruch 1, **dadurch gekennzeichnet,** daß das erste innere Mantelrohrteil (5) einteilig mit dem Deformationselement (9) ausgebildet ist und sein freies Ende (11) am dritten mittleren Mantelrohrteil (12) befestigt ist.

3. Sicherheitslenksäule nach den Ansprüchen 1 oder 2, **dadurch gekennzeichnet,** daß das erste innere Mantelrohrteil (5) mit dem Deformationselement (9) innerhalb des zweiten äußeren Mantelrohrteils (6) axial verschiebbar zwischen Gleitlagerungen (14, 15, 16) gehalten ist.

4. Sicherheitslenksäule nach einem oder mehreren der vorhergehenden Ansprüche, **dadurch gekennzeichnet,** daß die Verstellvorrichtung (10) am zweiten äußeren Mantelrohrteil (6) gehalten ist und das Zahnelement (20) eine Öffnung (22) dieses Teils durchdringt und in das Profil der Zahnstange (21) eingreift.

5. Sicherheitslenksäule nach einem oder mehreren der vorhergehenden Ansprüche, **dadurch gekennzeichnet,** daß das dritte mittlere Mantelrohrteil (12) über die Verbindung Zahnelement (20) - Zahnstange (21) gegen ein axiales Verschieben in Lage gehalten wird und ein Widerlager für das Deformationselement (9) bildet.

6. Sicherheitslenksäule nach einem oder mehreren der vorhergehenden Ansprüche, **dadurch gekennzeichnet,** daß das mittlere Mantelrohrteil (12) mit seinem dem Deformationselement (9) abgekehrten Ende auf dem ersten inneren Mantelrohrteil (5) geführt ist.

7. Sicherheitslenksäule nach einem oder mehreren der vorhergehenden Ansprüche, **dadurch gekennzeichnet,** daß das mittlere Mantelrohrteil (12) mit seinem dem Deformationselement (9) abgekehrten freien Ende (13) zum inneren Mantelrohrteil (5) über abscherbare Kunststoffstifte (22) verbunden ist.

8. Sicherheitslenksäule nach einem oder mehreren der vorhergehenden Ansprüche, **dadurch gekennzeichnet,** daß das Deformationselement (9) aus einem Wellrohr besteht.

9. Sicherheitslenksäule nach einem oder mehreren der vorhergehenden Ansprüche, **dadurch gekennzeichnet,** daß ein unterer Bereich des Deformationselements (9) innerhalb des mittleren Mantelrohrteiles (12) koaxial angeordnet und annähernd anliegend zu seiner inneren Umfangsfläche (12a) geführt ist, wobei ein oberer Bereich des Deformationselements (9) auf der Lenkspindel (2) gehalten ist.

10. Sicherheitslenksäule nach einem oder mehreren der vorhergehenden Ansprüche, **dadurch gekennzeichnet,** daß das Lenkspindelteil (2a) am äußeren Mantelrohrteil (6) über ein Lager (6a) gehalten ist, und das weitere Lenkspindelteil (2) über ein Lager (5a) mit dem inneren Mantelrohrteil (5) verbunden ist und die Lenkspindelteile (2, 2a) über eine Verzahnung (25) im Verbindungsbereich (24) längsverschieblich zueinander gehalten werden.

## Claims

1. An adjustable safety steering column for a motor vehicle, in particular with an airbag, having a steering shaft collapsible telescopically and mounted in outer-column parts, wherein a first, internal outer-column part (5) is interposed between a steering shaft and a second, external outer-column part (6) and is connected at the free end remote from the steering wheel (3) to a deformation member, **characterized in that** the deformation member (9) is supported at the other end on a third, middle outer-column part (12) surrounding the deformation member (9) and having a toothed rack (21) into which a meshing toothed member (20) on an adjustment device (10) engages in order to displace the steering column (1) axially.

2. A safety steering column according to Claim 1, **characterized in that** the first, internal outer-column part (5) is formed integrally with the deformation member (9) and the free end (11) thereof is secured to the third, middle outer-column part (12).

3. A safety steering column according to Claim 1 or 2, **characterized in that** the first, internal outer-column part (5) is held by the deformation member (9) inside the second, external outer-column part (6) so as to be axially displaceable between sliding bearings (14, 15, 16).

4. A safety steering column according to one or more of the preceding Claims, **characterized in that** the adjustment device (10) is held on the second, external outer-column part (6), and the toothed member (20) passes through an opening (22) in the said part and engages in the profile of the toothed rack (21).

5. A safety steering column according to one or more of the preceding Claims, **characterized in that** the third, middle outer-column part (12) is held in place by way of the connexion between the toothed member (20) and the toothed rack (21) so as to be prevented from being displaced axially and forms an abutment for the deformation member (9).

6. A safety steering column according to one or more of the preceding Claims, **character****ized in that** the middle outer-column part (12) is guided with the end thereof remote from the deformation member (9) on the first, internal outer-column part (5).

7. A safety steering column according to one or more of the preceding Claims, **characterized in that** the middle outer-column part (12) is connected by the free end (13) thereof remote from the deformation member (9) to the first, internal outer-column part (5) by way of plastics pins (22) which can be shorn off.

8. A safety steering column according to one or more of the preceding Claims, **characterized in that** the deformation member (9) comprises a corrugated tube.

9. A safety steering column according to one or more of the preceding Claims, **characterized in that** a lower region of the deformation member (9) is arranged coaxially inside the middle outer-column part (12) and is guided substantially adjacent to the internal peripheral surface (12a) thereof, an upper region of the deformation member (9) being held on the steering shaft (2).

10. A safety steering column according to one or more of the preceding Claims, **characterized in that** the steering-shaft part (2a) is held on the second, external outer-column part (6) by way of a bearing (6a), and the further steering-shaft part (2) is connected to the internal outer-column part (5) by way of a bearing (5a), and the steering-shaft parts (2, 2a) are held by way of teeth (25) in the connexion area (24) so as to be longitudinally displaceable with respect to each other.

## Revendications

1. Colonne de direction de sécurité réglable pour un véhicule automobile, en particulier avec un sac à air, qui comporte un arbre de direction télescopique, monté dans des parties de tube de gainage, une première partie de tube de gainage (5) intérieure étant prévue entre un arbre de direction et une deuxième partie de tube de gainage (6) extérieure et étant reliée à l'extrémité libre, tournée à l'opposé du volant (3), avec un élément de déformation, caractérisée en ce que l'élément de déformation (9) prend appui à l'autre extrémité contre une troisième partie de tube de gainage (12) centrale, enveloppant l'élément de déformation (9), laquelle comporte une crémaillère (21) avec laquelle engrène un élément denté (20) d'un dispositif de réglage (10), en vue du déplacement axial de la colonne de direction (1).

2. Colonne de direction de sécurité selon la revendication 1, caractérisée en ce que la première partie de tube de gainage (5) intérieure est conçue d'une seule pièce avec l'élément de déformation (9) et son extrémité libre (11) est fixée sur la troisième partie de tube de gainage (12) centrale.

3. Colonne de direction de sécurité selon les revendications 1 ou 2, caractérisée en ce que la première partie de tube de gainage (5) intérieure avec l'élément de déformation (9) est maintenue axialement coulissante entre les paliers glissants (14, 15, 16), à l'intérieur de la deuxième partie de tube de gainage (6) extérieure.

4. Colonne de direction de sécurité selon une ou plusieurs des revendications précédentes, caractérisée en ce que le dispositif de réglage (10) est maintenu sur la deuxième partie de tube de gainage (6) extérieure et l'élément denté (20) traverse une ouverture (22) de cette partie et s'engage dans le profil de la crémaillère (21).

5. Colonne de direction de sécurité selon une ou plusieurs des revendications précédentes, caractérisée en ce que la troisième partie de tube de gainage (12) centrale est maintenue en position contre un déplacement axial, par la liaison entre l'élément denté (20) et la crémaillère (21), et forme une butée pour l'élément de déformation (9).

6. Colonne de direction de sécurité selon une ou plusieurs des revendications précédentes, caractérisée en ce que la partie de tube de gainage (12) centrale avec son extrémité tournée à l'opposé de l'élément de déformation (9) est guidée sur la première partie de tube de gainage (5) intérieure.

7. Colonne de direction de sécurité selon une ou plusieurs des revendications précédentes, caractérisée en ce que la partie de tube de gainage (12) centrale est reliée avec son extrémité libre (13), tournée à l'opposé de l'élément de déformation (9), à la partie de tube de gainage (5) intérieure, par des tiges de matière plastique (22) cisaillables.

8. Colonne de direction de sécurité selon une ou plusieurs des revendications précédentes, caractérisée en ce que l'élément de déformation (9) est un tube ondulé.

9. Colonne de direction de sécurité selon une ou plusieurs des revendications précédentes, caractérisée en ce qu'une zone inférieure de l'élément de déformation (9) est disposée coaxialement à l'intérieur de la partie de tube de gainage (12) centrale et est guidée de manière à s'appliquer approximativement contre sa surface périphérique (12a) intérieure, une zone supérieure de l'élément de déformation (9) étant maintenue sur l'arbre de direction (2).

10. Colonne de direction de sécurité selon une ou plusieurs des revendications précédentes, caractérisée en ce que la partie de l'arbre de direction (2a) est maintenue sur la partie de tube de gainage (6) extérieure, par un palier (6a) et l'autre partie d'arbre de direction (2) est reliée à la partie de tube de gainage (5) intérieure, par un palier (5a) et les parties de l'arbre de direction (2, 2a) sont maintenues coulissantes longitudinalement l'une par rapport à l'autre dans la zone de liaison (24), par une denture (25).
